Europäisches Patentamt

European Patent Office

Office européen des brevets

(11) Veröffentlichungsnummer: **0 236 856 B1**

(12) **EUROPÄISCHE PATENTSCHRIFT**

(45) Veröffentlichungstag der Patentschrift: **12.08.92**

(21) Anmeldenummer: **87102680.3**

(22) Anmeldetag: **25.02.87**

(51) Int. Cl.5: **C04B 37/00**, C04B 37/02, B23K 35/30, C22C 22/00, C22C 19/07, C04B 41/89

(54) Verfahren zum Verbinden von Formteilen aus SiC mit Keramik oder Metall.

(30) Priorität: **14.03.86 DE 3608559**

(43) Veröffentlichungstag der Anmeldung:
**16.09.87 Patentblatt 87/38**

(45) Bekanntmachung des Hinweises auf die Patenterteilung:
**12.08.92 Patentblatt 92/33**

(84) Benannte Vertragsstaaten:
**AT CH DE FR GB LI SE**

(56) Entgegenhaltungen:
**DE-A- 3 003 186        DE-A- 3 307 791
DE-B- 2 318 727        DE-B- 2 434 122
GB-A- 2 061 155        US-A- 4 426 033**

**DERWENT ACCESSION Nr. 74-86 454v, Oue-stel Telesystem (WPI) - DERWENT PUBLICA-TIONS LTD., London *Zusammenfassung* & JP-B-74-43 089**

**DERWENT ACCESSION Nr. 86-52 790, Oue-stel Telesystem (WPIL) - DERWENT PUBLI-CATIONS LTD., London *Zusammenfassung* & JP-A-61-7 062**

**DERWENT ACCESSION Nr. 81-24 208d, Oue-stel Telesystem(WPIL) DERWENT PUBLICA-TIONS LTE., London *Zusammenfassung* & JP-A-56-13 658**

**DERWENT ACCESSION Nr. 82-12 825e, Oue-stel Telesystem (WPIL) DERWENTPUBLICA-TIONS LTD., London *Zusammenfassung* & JP-A-57-3 781**

(73) Patentinhaber: **Forschungszentrum Jülich GmbH
Postfach 1913
W-5170 Jülich(DE)**

(72) Erfinder: **Godziemba-Maliszewski, Jerzy, Dr.
Bastionstrasse 10
W-5170 Jülich(DE)**

**Beschreibung**

Die Erfindung bezieht sich auf ein Verfahren zum Verbinden von Formteilen aus SiC-Keramik miteinander oder mit Formteilen aus anderer Keramik oder Metall, bei dem die zu verbindenden Oberflächen unter Zwischenschaltung einer Metallschicht unter Diffusionsschweißbedingungen vereinigt werden.

Siliciumcarbid ist in Anbetracht seiner Festigkeit und guten Korrosionsbeständigkeit ein für Hochtemperaturanwendungen sehr interessantes Material. Seine hohe Härte bereitet allerdings bei der Bearbeitung erhebliche Schwierigkeiten. Es ist daher bekannt, komplizierte Werkstücke aus einfacheren Einzelteilen durch Verbindung derselben herzustellen. Ebenso ist die Verbindung von Siliciumcarbid mit Formkörpern aus Metall oder aus anderer Keramik bisweilen notwendig.

Für die hochtemperaturfeste Verbindung von Formteilen aus Siliciumcarbid miteinander oder mit Formteilen aus anderer Keramik wie z.B. Aluminiumoxid oder Zirkonoxid sind Hochtemperatur-Fügeverfahren bekannt:

So beschreibt z.B. die DE-OS 30 03 186 ein Diffusionsschweißen von SiSiC-Einzelteilen bei Temperaturen unter 1300 °C unter gleichzeitiger Druckbelastung der Verbindungsfläche. Gemäß der DE-OS 31 39 270 werden gut vorbereitete SiSiC-Paßflächen durch Aufheizen auf 1500 bis 1800 °C miteinander verbunden.

Nach anderen Fügeverfahren wird in oder zwischen die Verbindungsflächen Kohlenstoff gebracht und bei hoher Temperatur unter Einwirkung von Silicium in Siliciumcarbid umgewandelt (s. DE-OSen 29 22 953 und 33 11 553).

Eine Verbindung von Formteilen aus siliciumfreiem Siliciumcarbid mit Metallteilen oder mit weiterem Siliciumcarbid über eine metallische Übergangsschicht wird im Bericht BMFT-FB T 79-124 beschrieben, bei der 100 bis 500 μm dünne Schichten aus heißgepreßtem Wolfram- und Molybdänpulver verwendet werden.

Diese bislang bekannten Fügeverfahren sind aufwendig und für den technischen Einsatz oft zu kompliziert. Außerdem begrenzen sie den Einsatzbereich von SiC im Hinblick auf die Einsatztemperatur und die Festigkeit. Solche Verbindungen besitzen auch keine ausreichende Beständigkeit für einen Einsatz bei hohen Temperaturen an Luft.

Schließlich wurde im "Fortschrittsbericht der Dt. Keram. Gesellschaft" Bd 1 (1985) S. 188 - 198, über Versuche zum Verbinden von Siliciumcarbid mit Metallen durch Diffusionsschweißen vermittels einer metallischen Zwischenschicht aus silicid- und/oder carbidbildenden Metallen, wie Pt, Pd, Cu, Ni, Co, Fe, Mn, Cr, Mo, Zr, Nb, Hf, Al, Ti, V, Ta, W berichtet. Bei diesem Versuchen, für die insbesondere die Metalle Nickel, Kupfer und Platin gewählt wurden, konnten jedoch keine zufriedenstellenden Verbindungen erzielt werden. Vielmehr zeigten sich in den Grenzschichten Poren und ausgehend vom Metall-Siliciumcarbid-Übergang Rißbildungen, die einen technischen Einsatz des Verfahrens verbieten.

Ziel der Erfindung ist daher ein Fügeverfahren, bei dem poren-und rißfreie Verbindungen erzielt werden und das einen relativ breiten Spielraum von Anwendungsmöglichkeiten bietet und mit begrenztem technischen Aufwand durchführbar ist.

Bei dem zu diesem Zweck entwickelten erfindungsgemäßen Fügeverfahren der eingangs genannten Art wird

a) zwischen den zu verbindenen Oberflächen eine manganhaltige Legierungsschicht aus MnCu (mit 10 - 90 Gew% Cu) oder MnCo (mit 5 - 50 Gew% Co) vorgesehen, die ggf. zusätzlich je 2 - 45 Gew% von zumindest einem der Metalle Cr, Ti, Zr, Fe, Ni, V und/oder Ta aufweist, wobei die Summe der Zusätze 70 Gew% nicht überschreiten soll, und

b) die Verbindung der Formteile unter Diffusionsschweißbedingungen herbeigeführt.

Mangankobalt- und Mankankupferlegierungen an sich sind für die Verbindung von Keramik oder nichtmetallischen und metallischen Materialien unter Aufschmelzbedingungen bereits bekannt: So wird in der US-PS 4 426 033 ein Hartlot aus MnCu mit bis zu 45 % Mn mit aktivierenden Zusätzen aus Ti, Cr und/oder V angegeben, das speziell zum Verbinden von Aluminiumoxid oder Wolframcarbid durch Hartlöten vorgesehen wird.

Aus der JP-A-61-70 62 ist die flächenhafte Verbindung von Metallblechen unter Zwischenschaltung einer MnCu-Folie als Haftvermittler bekannt, der unter Erwärmung aufgeschmolzen wird.

Schließlich zeigt die JP-A-56-13 658 ein Kathodenmaterial, bei dem MnCo mit 35 - 60 % Co in Pulverform mit Metallpulver wie Ag-Pulver gemischt, gepreßt und gesintert wird, um so zu einem für die Herstellung von Kathoden geeigneten Sinterkörper zu gelangen.

Die Zusammensetzung der erfindungsgemäß zu verwendenden Legierungen kann durch Auswahl der zusätzlichen Legierungselemente Cr, Ti und Zr als Carbid- und Silicidbildner, Ni und Fe als vorwiegend Silicidbildner sowie Ta und V als vorwiegend Carbidbildner den zu erwartenden Belastungen angepaßt werden.

Insbesondere wird als Metallschicht eine manganhaltige Legierungsschicht aus eutektischen Zusammensetzungen von MnCuFe vorgesehen mit 5 bis 30 Gew% Fe, 10 bis 90 Gew% Cu, Rest Mn oder aus MnCoCr mit 2 bis 45 Gew% Cr .

Besonders zweckmäßig, insb. zur Verbindung von SiC-Formteilen miteinander sind Schichten aus MnCuFe mit einer Zusammensetzung von (50 : 40 : 10 in Gew%) bis (40 : 50 : 10 in Gew%) oder MnCoCr (60 : 30 : 10 in Gew%).

Legierungen aus Mangankupfer mit 25 bis 82 Gew% Kupfer haben Schmelzpunkte zwischen 870 und 1115 °C.

Beispiele für brauchbare Mangan-Kupfer-Eisen-Zusammensetzungen (in Gew%) sind mit zugehörigem Schmelzpunkt in der nachfolgenden Tabelle angegeben.

| Nr. | Gew% Mn | Gew% Cu | Gew% Fe | Fp °C |
|-----|---------|---------|---------|-------|
| 1 | 50 | 20 | 30 | 1230 |
| 2 | 60 | 30 | 10 | 1150 |
| 3 | 50 | 30 | 20 | 1180 |
| 4 | 50 | 40 | 10 | 1150 |
| 5 | 40 | 50 | 10 | 1170 |
| 6 | 30 | 65 | 5 | 1130 |
| 7 | 10 | 85 | 5 | 1180 |
| 8 | 5 | 90 | 5 | 1180 |

Legierungen aus Mangankobalt mit 5 bis 50 Gew.% Co haben Schmelzpunkte zwischen 1180 und 1220°C.

Für das Fügeverfahren werden Manganlegierungsschichten in einer Dicke bis zu 1000 $\mu$m, zweckmäßiger bis zu 500 $\mu$m, insb. bis zu 200 $\mu$m und vorzugsweise von 5 bis 50 $\mu$m insb. um 10 $\mu$m vorgesehen. Diese werden z.B. als Folie oder auch als Pulver oder in anderer bekannter Weise zwischen die gereinigten zu verbindenden Oberflächen gebracht und diese Anordnung einem Diffusionsschweißvorgang unterworfen. Gemäß einer zweckmäßigen Alternative wird auf die saubere Verbindungsfläche des SiC-Formteils eine entsprechende Legierungsschicht aufgedampft, aufgesputtert oder in anderer Weise aufgebracht.

Das Diffusionsschweißen erfolgt dann durch Aufheizen unter einem Anpreßdruck von 0,5 bis 60 MPa auf eine etwa 20 bis 300 °C unter der Schmelztemperatur der Zwischenschicht liegende Temperatur zwischen 850 und 1300°C 5 bis 50 insb. etwa 10 bis 15 Minuten lang, um so die Verbindungsflächen zu vereinigen.

Bei diesem Verfahren soll zumindest die zu verbindende Oberfläche des SiC-Formteils kein freies Silicium (möglichst ≤ 0,1 %) enthalten. Formkörper aus SiSiC müssen daher vorab durch Behandlung mit einer aufgedampften Metallschicht aus zumindest einem der Metalle Mn, Cu, Co, Cr, Ti, Zr, Fe, Ni, V, Ta (mit einer Dicke von 3 bis 1000$\mu$m) oder mit Kohlenstoff in Form von Ruß oder mit einer Siliciumcarbid bildenden gasförmigen Verbindung oder aber mit Stickstoff bei erhöhter Temperatur behandelt werden, um das freie Silicium zu Siliciumcarbid oder Siliciumnitrid oder Silicid umzusetzen, wobei im letzteren Falle der Silicidbildner eine stärkere Affinität zum Silicium haben soll als die manganhaltige Legierung der Zwischenschicht bzw. das ggf. anzufügende Metallteil.

Das Verfahren eignet sich zur Verbindung von Siliciumcarbidformteilen miteinander und mit Formteilen aus anderer Keramik wie z.B. $Al_2O_3$ oder $ZrO_2$ sowie zur Verbindung solcher Siliciumcarbid-Formteile mit Formteilen aus Metallen wie Stahl, Edelstahl, Zircaloy, Kupfer, Bronze, Vacon oder Nickelbasislegierungen. Dabei wird die Zusammensetzung der verbindenden Legierungsschicht insb. der Zusammensetzung des zu verbindenden metallischen Formteils angepaßt: Legierungsbestandteile des metallischen Formteils, die beim Diffusionsschweißen zum Eindringen in die Verbindungsschicht neigen (unter Verarmung der grenznahen Schichten des metallischen Formteils) sollen möglichst zurückgehalten werden, was durch angemessene Zusammensetzung der Verbindungsschicht erreicht werden kann.

Die Auswahl der bevorzugten MnCuFe- oder MnCoCr-Zusammensetzung richtet sich auch nach dem anzufügenden Metall- oder Keramikteil: dessen übliche Diffusionsschweißtemperatur soll deutlich unter dem Schmelzpunkt der MnCu(Fe)- oder MnCo(Cr)-Schicht liegen, insb. etwa 100 bis 1500°C darunter.

Nachfolgend wird die Erfindung anhand von Beispielen näher erläutert:

Beispiel 1
---

Für die Verbindung von Siliciumcarbid und Kupfer wurde die SiC-Bindefläche durch Schleifen mit einer Diamantschleifscheibe (Korngröße: 30 $\mu$m) und anschließendes Entfetten mit Alkohol vorbehandelt. Die Kupfer-Bindefläche wurde mit Schleifpapier 320 geschliffen, mit 1 : 1 mit Wasser verdünnter 65 %iger Salpetersäure abgebeizt und mit Alkohol entfettet.

Zwischen die so geschliffenen und gereinigten Flächen von Siliciumcarbid und Kupfer wurde eine wie die Kupferfläche gebeizte und entfettete Folie aus MnCuFe (40 : 50 : 10 Gew%; Fp 1170 °C) mit einer Dicke von 200 $\mu$m eingebracht und die mit einem Druck von 10 MPa belastete Anordnung im Vakuum (min. 0,133 Pa) für 15 Minuten auf 900°C aufgeheizt. Auf diese Weise wurde eine festhaftende Verbindung zwischen Siliciumcarbid und Kupfer erzielt.

Alternativ wurde die MnCuFe-Legierung in einer Dicke von 50 $\mu$m auf die SiC-Bindefläche im Vakuum aufgedampft und die so behandelte Fläche mit der gereinigten Cu-Bindefläche durch Diffusionsschweißen wie vorstehend angegeben vereinigt.

Auf diese Weise wurde gleichfalls eine festhaftende Verbindung erreicht.

Beispiel 2

Eine freies Silicium enthaltende Oberflächenschicht von reaktionsgebundenem Siliciumcarbid (SiSiC) wurde für die Verbindung mit Metallen oder weiterem Siliciumcarbid in folgender Weise vorbehandelt:
Die geschliffene und gereinigte, freies Silicium enthaltende Bindefläche wurde mit Ruß beschichtet und im Vakuum (0,133 Pa) 50 Minuten lang auf 1100 °C aufgeheizt.

Nach dem Erkalten wurde die so behandelte Fläche von überschüssigem Ruß befreit und war dann bereit für ein Fügeverfahren zur Verbindung mit metallischen Werkstoffen oder weiteren Siliciumcarbidteilen.

Die so vorbehandelte Siliciumcarbidfläche wurde unter Zwischenschaltung von MnCuFe (30 : 65 : 5 Gew%; Fp 1130 °C) in einem Diffusionsschweißprozess bei 1050 °C mit metallischen Werkstoffen oder mit Teilen aus Siliciumcarbid verbunden.

Beispiel 3

Zwischen die gereinigten Verbindungsflächen von Siliciumcarbid (Vorbehandlung wie in Beispiel 1) und rostfreiem Stahl (geschliffen mit Schleifpapier 320, gebeizt mit einer Mischung aus 50 ml 65%iger Salpetersäure, 20 ml 40%iger Flußsäure und 70 ml Wasser und entfettet mit Alkohol) wurde eine 200 $\mu$m dicke, wie in Beispiel 1 vorbehandelte Folie aus MnCuFe (40 : 50 : 10 Gew%; Fp 1170 °C) eingebracht und die mit einem Druck von 10 MPa belastete Anordnung im Vakuum oder Inertgas (Ar) 20 Minuten lang zum Diffusionsschweißen auf 1100 °C aufgeheizt. Auf diese Weise wurde eine feste Verbindung zwischen dem Siliciumcarbid und dem rostfreien Stahl erzielt.

Alternativ kann die MnCuFe-Legierung auf die Siliciumcarbidoberfläche aufgedampft werden und die so beschichtete Siliciumcarbidfläche dann zusammen mit dem Werkstück aus rostfreiem Stahl einem Diffusionsschweißverfahren unterworfen werden.

Beispiel 4

Zwischen die geschliffenen und gereinigten Oberflächen von zwei Teilen aus Siliciumcarbid wurde eine gereinigte 300 $\mu$m dicke Folie aus MnCuFe (50 : 30 : 20 Gew%; Fp 1180 °C) eingebracht und die mit einem Druck von 20 MPa belastete Anordnung 20 Minuten lang im Vakuum zur Herbeiführung einer Diffusionsschweißverbindung auf 1100 °C aufgeheizt. Auf diese Weise wurde eine feste Verbindung zwischen den Siliciumcarbidteilen erreicht.

Alternativ kann die MnCuFe-Legierung auf eine der beiden SiC-Verbindungsflächen durch Aufdampfen aufgetragen werden.

Beispiel 5

Zur Verbindung von Aluminiumoxidteilen mit Teilen aus Siliciumcarbid wurde zwischen die gereinigten Verbindungsflächen eine Folie aus MnCu (38 : 62 Gew%; Fp 870 °C) in einer Dicke von 200 $\mu$m eingebracht und die mit einem Druck von 10 MPa belastete Anordnung bei 860 °C 15 Minuten lang einem Diffusionsschweißvorgang im Vakuum unterworfen. Auf diese Weise wurde eine festhaftende Verbindung zwischen den beiden Keramikteilen erzielt.

Beispiel 6

Für die Verbindung von Siliciumcarbid mit rostfreiem Stahl wurde die SiC-Bindefläche durch Schleifen mit einer Diamantschleifscheibe (Korngröße: 30 μm) und anschließendes Entfetten mit Alkohol vorbehandelt. Die Stahl-Bindefläche wurde mit Schleifpapier 320 geschliffen, mit einem Gemisch aus 50 ml 65%ige Salpetersäure, 20 ml 40%ige Flußsäure und 70 ml Wasser gebeizt und mit Alkohol entfettet.

MnCoCr-Pulver (60 : 30 : 10 Gew%) wurde mit Alkohol entfettet und in einer Dicke von 500 μm zwischen die gereinigten Bindeflächen aus SiC und Stahl gebracht.

Zum Diffusionsschweißen wurde diese Anordnung unter einem Druck von 60 MPa 25 Min. lang im Vakuum ($10^{-2}$ Pa) auf 1150 °C erhitzt. Auf diese Weise wurde eine festhaftende Verbindung zwischen Siliciumcarbid und Stahl erreicht.

Beispiel 7

Zur Verbindung von Siliciumcarbid mit Kupfer wurde die SiC-Bindefläche zunächst mit einer Diamantschleifscheibe (Korngröße: 30 μm) geschliffen und mit Alkohol entfettet. Die so vorbehandelte Fläche wurde im Vakuum (10 Pa) mit MnCuFe (40 : 50 : 10 Gew%) in einer Dicke von 100 μm bedampft (Verdampfungstemperatur 1200 °C).

Die so mit MnCuFe bedampfte Fläche wurde mit einer durch Schleifen, Beizen und Entfetten vorbehandelten Kupfer-Bindefläche vereinigt und diese Anordnung 15 Min. lang unter 10 MPa in Argon (10 kPa) auf 900 °C aufgeheizt zur Erzielung einer Diffusionsschweißverbindung. Auf diese Weise wurde eine festhaftende Verbindung yon Siliciumcarbid und Kupfer erzielt.

Beispiel 8

Eine 50 μm dicke Schicht aus MnCoCrTaV der Zusammensetzung 68 : 32 : 10 : 6 : 4 (in Gewichtsteilen) mit einem Schmelzpunkt von 1530°C wurde auf die gereinigte Oberfläche eines Siliciumcarbid-Formteils aufgedampft, die dann mit der ebenfalls gereinigten Oberfläche eines Aluminiumoxidteils vereinigt wurde. Die zu verbindenden Flächen wurden unter einem Preßdruck von 20 MPa 15 min lang im Vakuum bei 1045°C einem Diffusionsschweißvorgang unterworfen, wodurch eine feste Verbindung zwischen den beiden Keramikteilen erzielt wurde.

**Patentansprüche**

1. Verfahren zum Verbinden von Formteilen aus SiC-Keramik miteinander oder mit Formteilen aus anderer Keramik oder Metall, wobei
   a) zwischen den zu verbindenen Oberflächen eine manganhaltige Legierungsschicht aus MnCu (mit 10 - 90 Gew% Cu) oder MnCo (mit 5 - 50 Gew% Co) vorgesehen wird, die ggf. zusätzlich je 2 - 45 Gew% von zumindest einem der Metalle Cr, Ti, Zr, Fe, Ni, V und/oder Ta aufweist, wobei die Summe der Zusätze 70 Gew% nicht überschreiten soll, und wobei
   b) die Verbindung der Formteile unter Diffusionsschweißbedingungen erfolgt.

2. Verfahren nach Anspruch 1,
   **dadurch gekennzeichnet,**
   daß die manganhaltige Legierung aus Zusammensetzungen von MnCuFe mit 5 - 30 Gew% Fe, 10 - 90 Gew% Cu, Rest Mn oder aus MnCoCr mit 2 - 45 Gew% Gr besteht.

3. Verfahren nach Anspruch 2,
   **dadurch gekennzeichnet**,
   daß die manganhaltige Legierungsschicht für die Verbindung von SiC-Körpern miteinander aus MnCuFe mit der Zusammensetzung von (50 : 40 : 10; in Gew%) bis (40 : 50 : 10 in Gew%) oder MnCoCr (60 : 30 : 10 in Gew%) besteht.

4. Verfahren nach einem der vorangehenden Ansprüche,
   **dadurch gekennzeichnet,**
   daß man die zu verbindenden Flächen unter Zwischenschaltung der manganhaltigen Legierungsschicht 5 bis 50 Minuten lang unter einem Anpreßdruck von 0,5 bis 60 MPa auf eine 20 bis 300°C unter dem Schmelzpunkt der Legierungsschicht liegende Temperatur aufheizt.

5. Verfahren nach Anspruch 4,
   **dadurch gekennzeichnet,**

daß man die Diffusionsschweißtemperatur 10 bis 15 Minuten lang aufrechterhält.

6. Verfahren nach Anspruch 4 oder 5,
**dadurch gekennzeichnet,**
daß man die Legierungsschicht auf die zu verbindende SiC-Fläche aufbringt, insb. aufdampft oder aufsuttert, oder als Folie zwischen den zu verbindenden Oberflächen anordnet.

7. Verfahren nach einem der vorangehenden Ansprüche,
**dadurch gekennzeichnet,**
daß die Metallschicht mit einer Dicke von 5 bis 200 $\mu$m, insb. 10 bis 50 $\mu$m, vorgesehen wird.

**Claims**

1. Method of joining SiC ceramic moulded parts together or to moulded parts made from another ceramic or metal, wherein
    a) between the surfaces to be joined a manganiferous alloying layer of MnCu (with 10 - 90 % by wt. Cu) or MnCo (with 5 - 50 % by wt. Co) is provided which, if appropriate, additionally incorporates 2 - 45 % by wt. of at least one of the metals Cr, Ti, Zr, Fe, Ni, V and/or Ta, the sum of the adjuvants not to exceed 70 % by wt, and wherein
    b) the moulded parts are joined under diffusion welding conditions.

2. Method according to claim 1,
characterised in that the manganiferous alloy consists of MnCuFe compositions having 5 - 30 % by wt. Fe, 10 - 90 % by wt. Cu, and the balance Mn, or of MnCoCr having 2 - 45 % by wt. Cr.

3. Method according to claim 2,
characterised in that the manganiferous alloying layer for joining together SiC bodies consists of MnCuFe of the composition (50 : 40 : 10; in % by wt.) to (40 : 50 : 10 in % by wt.) or MnCoCr (60 : 30 : 10 in % by wt.).

4. Method according to one of the preceding claims,
characterised in that the faces to be joined are heated, with the manganiferous alloying layer interposed, for 5 to 50 minutes under a contact pressure of 0.5 to 60 MPa to a temperature between 20 and 300°C below the melting point of the alloying layer.

5. Method according to claim 4,
characterised in that the diffusion welding temperature is maintained for 10 to 15 minutes.

6. Method according to claim 4 or 5,
characterised in that the alloying layer is applied to the SiC face to be joined, more particularly vacuum evaporated or sputtered thereonto, or arranged as a sheet between the surfaces to be joined.

7. Method according to one of the preceding claims,
characterised in that the metallic layer is provided with a thickness of 5 to 200 $\mu$m, more particularly 10 to 50 $\mu$m.

**Revendications**

1. Procédé de liaison de pièces formées en céramique SiC entre elles ou avec des pièces formées en d'autres céramiques ou métaux, où
    (a) on place une couche d'alliage de MnCu renfermant du manganèse (avec 10 à 90 % en masse de Cu) ou de MnCo (avec 5 à 50 % en masse de Co) entre les deux surfaces à lier, possédant additionnellement le cas échéant, chacun 2 à 45 % en masse au moins d'un des métaux Cr, Ti, Zr, Fe, Ni, V et/ou Ta, la somme des additifs ne devant pas dépasser 70 % en masse, et où
    (b) la liaison des pièces formées est conduite dans les conditions de soudure par diffusion.

2. Procédé selon la revendication 2, caractérisé en ce que la couche renfermant du manganèse est constituée de la composition MnCuFe renfermant 5 à 30 % en masse de Fe, 10 à 90 % en masse de Cu, le reste étant constitué par Mn, ou bien de MnCoCr avec 2 à 45 % en masse de Cr.

3. Procédé selon la revendication 2, caractérisé en ce que la couche d'alliage, renfermant du manganèse pour la liaison des pièces en SiC entre elles, est constituée de MnCuFe ayant la composition de (50 : 40 : 10 % en masse) à (40 : 50 : 10 % en masse) ou bien de MnCoCr (60 : 30 : 10 % en masse).

4. Procédé selon l'une quelconque des revendications précédentes, caractérisé en ce qu'on chauffe les surfaces à lier en interposant la couche d'alliage à base de manganèse, pendant 5 à 50 minutes, sous une pression de 0,5 à 60 MPa, et à une température inférieure de 20 à 300°C à la température de fusion de la couche d'alliage.

5. Procédé selon la revendication 4, caractérisé en ce qu'on maintient pendant 10 à 15 minutes la température de soudure par diffusion.

6. Procédé selon la revendication 4 ou 5, caractérisé en ce que la couche d'alliage est placée sur la surface de SiC à lier, en particulier on la vaporise ou on la pulvérise, ou bien on la disperse sous forme de feuille entre les surfaces supérieures à lier.

7. Procédé selon l'une quelconque des revendications précédentes, caractérisé en ce que la couche métallique a une épaisseur de 5 à 200 $\mu$m, en particulier de 10 à 50 $\mu$m.